(19)

Europäisches
Patentamt

European
Patent Office

Office européen
des brevets

(11) **EP 2 256 488 B1**

(12) **EUROPEAN PATENT SPECIFICATION**

(45) Date of publication and mention
of the grant of the patent:
**26.12.2012 Bulletin 2012/52**

(51) Int Cl.:
***G01N 27/04*** *(2006.01)*

(21) Application number: **10163703.1**

(22) Date of filing: **24.05.2010**

(54) **Method of measuring the moisture content of a polymer matrix containing dispersed carbon nanotubes**

Verfahren zur Messung des Feuchtegehalts einer Polymermatrix mit dispergierten Kohlenstoffnanoröhren

Procédé de mesure de la teneur en humidité d'une matrice polymère contenant des nanotubes de carbone à dispersion

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.05.2009 IT TO20090396**

(43) Date of publication of application:
**01.12.2010 Bulletin 2010/48**

(73) Proprietor: **Alenia Aermacchi S.p.A.**
**21040 Venegono Superiore (Varese) (IT)**

(72) Inventors:
• **Russo, Salvatore**
**I-80010, QUARTO (Napoli) (IT)**
• **Iannuzzo, Generoso**
**I-83100, AVELLINO (IT)**
• **Neitzert, Heinrich Christoph**
**I-10138, TORINO (IT)**
• **Vertuccio, Luigi**
**I-84038, TEGGIANO (Salerno) (IT)**
• **Vittoria, Vittoria**
**I-80128, NAPOLI (IT)**
• **Guadagno, Liberata**
**I-84084, FISCIANO (Salerno) (IT)**
• **Sorrentino, Andrea**
**I-80036, PALMA CAMPANIA (Napoli) (IT)**

(74) Representative: **Gerbino, Angelo et al**
**Jacobacci & Partners S.p.A.**
**Corso Emilia 8**
**10152 Torino (IT)**

(56) References cited:
• MA ET AL: "Glycerol plasticized-starch/multiwall carbon nanotube composites for electroactive polymers" COMPOSITES SCIENCE AND TECHNOLOGY, ELSEVIER, UK, vol. 68, no. 1, 27 October 2007 (2007-10-27), pages 268-273, XP022318162 ISSN: 0266-3538
• KARKKANEN A ET AL: "Gas Sensing Properties of SWCNT and Teflon AF Composites" SENSORS, 2007 IEEE, IEEE, PI, 28 October 2007 (2007-10-28), pages 547-549, XP031221116 ISBN: 978-1-4244-1261-7
• MYUNG JIN LEE ET AL: "Humidity sensing characteristics of plasma functionalized multiwall carbon nanotube-Polyimide composite films" SENSORS, 2008 IEEE, IEEE, PISCATAWAY, NJ, USA, 26 October 2008 (2008-10-26), pages 430-433, XP031375108 ISBN: 978-1-4244-2580-8
• SU ET AL: "In situ synthesized composite thin films of MWCNTs/PMMA doped with KOH as a resistive humidity sensor" SENSORS AND ACTUATORS B, ELSEVIER SEQUOIA S.A., LAUSANNE, CH, vol. 124, no. 2, 7 June 2007 (2007-06-07), pages 303-308, XP022107812 ISSN: 0925-4005
• YU H ET AL: "Layer-by-Layer assembly and humidity sensitive behavior of poly (ethyleneimine)/multiwall carbon nanotube composite films" SENSORS AND ACTUATORS B, ELSEVIER SEQUOIA S.A., LAUSANNE, CH, vol. 119, no. 2, 7 December 2006 (2006-12-07), pages 512-515, XP025112344 ISSN: 0925-4005 [retrieved on 2006-12-07]

EP 2 256 488 B1

- CHEN Y S ET AL: "Humidity sensitive properties of NaPSS/MWNTs nanocomposites" JOURNAL OF MATERIALS SCIENCE, KLUWER ACADEMIC PUBLISHERS, BO, vol. 40, no. 18, 1 September 2005 (2005-09-01), pages 5037-5039, XP019210706 ISSN: 1573-4803
- LI Y ET AL: "Nanocomposites of carbon nanotubes and silicone-containing polyelectrolyte as a candidate for construction of humidity sensor" JOURNAL OF MATERIALS SCIENCE, KLUWER ACADEMIC PUBLISHERS, BO, vol. 40, no. 1, 1 January 2005 (2005-01-01), pages 245-247, XP019210329 ISSN: 1573-4803
- JOUNG-MAN PARK ET AL: "Nondestructive sensing and stress transferring evaluation of carbon nanotube, nanofiber, and Ni nanowire strands/polymer composites using an electro-micromechanical technique", PROCEEDINGS OF SPIE, SPIE, USA, vol. 6174, no. 61742U, 27 February 2006 (2006-02-27), pages 1-9, XP007911269, ISSN: 0277-786X, DOI: DOI: 10.1117/12.652736

**Description**

The present invention relates to a method of measuring and monitoring the humidity or water content of a polymer matrix, belonging to a composite material which is used for structural applications in aeronautics.

Numerous studies have been conducted on the fatigue resistance of composite materials with polymer matrices used for structural applications. However, information on the mechanisms leading to the collapse of these composites is still scarce and is contradictory in some cases. In particular, little is known as yet concerning the processes of chemical and mechanical degradation leading to the rupture of these composites, especially where the material is subjected to very severe operating conditions such as those encountered in aeronautics.

It is known that a composite which is subjected to repeated fatigue cycles develops numerous cracks of micrometric dimensions, which grow over time and lead to the rupture of the composite. One of the effects of the presence of these microcracks is facilitated ingress of water by capillary action into the material, which promotes a continuous degradation of the mechanical characteristics, due to matrix plasticization phenomena and also as a result of the catalysis of oxidation reactions. Clearly, these phenomena are aggravated by continual large variations of temperature in very short time intervals.

The velocity of ingress of the water (J) into a composite polymer material can be described theoretically by the equation

$$J = D(C1\text{-}C2)/L$$

in which C1 and C2 are the concentrations in two different positions within the thickness of the composite,
L is the distance between the two positions concerned, and
D is the diffusion coefficient of the composite.

Unfortunately, the formation of microcracks in the composite promotes the formation of microvoids in the matrix and substantially alters the diffusion process in the composite, thus making the above equation unusable for practical purposes.

Consequently, the actual humidity or water content in a composite material can only be discovered by measuring it directly, and numerous studies have been carried out on this topic.

Some of these studies have focused on ceramic materials, in which the variation of the dielectric properties of the system is used to measure the presence of water. The most interesting of these are based on films of ZnO, $TiO_2$ and $SiO_2$, since they have high sensitivity, reversibility, and a good degree of linearity in their responses. Unfortunately, the construction of these systems is very complicated, generally requiring high temperatures and complex multi-layer structures. Although the use of the sol-gel method has recently facilitated the production of these systems, they usually still require the presence of glass or quartz substrates which considerably limit the degree of miniaturization.

Other systems have been developed which incorporate polymer humidity sensors based on the variations of at least one of the dielectric, capacitive or resistive properties due to the presence of water in these materials.

The materials known as conductive polymers have arisen particular interest in this connection. It is known, for example, that an increase in water causes an increase in electrical conductivity of polyaniline (PAn) by stimulating the mechanism of electron transfer between the chains and/or the mobility of the dopant ions. In these systems, the presence of water causes the electrical conductivity to increase in a reversible linear way, by several orders of magnitude in some cases. The paper by K. Ogura, T. Saillo, M. Nakayama and H. Shiigi, The humidity dependence of the electrical conductivity of a soluble polyaniline-poly(vinyl alcohol) composite film, Journal of Material, Chemistry, 7, (1997) pp. 2363 - 2366, showed that blends of polyaniline and polyvinyl alcohol (PAn/PVA) could be used as humidity-sensitive materials. The advantage of blends of this type is that they can be processed in water and can easily be deposited as thin films.

S. Jain., S. Chakane, A. B. Samui, V. N. Krishnamurthy and S. V. Bhoraskar, Humidity sensing with weak acid-doped polyaniline and its composites, Sensors and Actuators B: Chemical, 96, (2003) pp. 124-129, showed that PAn-styrene-butyl acrylate (SBA) copolymers had a linear response to the humidity content over a very wide range (10-95% RH). Presumably, the linear response is due to the presence of PAn, since the SBA matrix has a low affinity for water. The resistance of the films is of the order of several MΩ and therefore this can offer a valid alternative to PAn/PVA mixtures.

X. Ma, J. Yu and N. Wang, Composite Science and Technology 68 (2008), pages 268-273, disclose the effect of water content on the electrical conductivity of MWCNT/glycerol-plasticized starch composites.

J.-M. Park, S.-J. Kim, J-G. Jung, G. Hansen and D.-J. Yoon, Proc. of SPIE 6174 (2006), pages 1-9, disclose the resistance of a CNT/epoxy composite as a function of ambient humidity.

The object of the present invention is therefore to provide a method of measuring the humidity content which is improved by comparison with the methods of the prior art and is free of their drawbacks.

The present invention proposes a method of measuring the humidity content of a polymer matrix of epoxy resin in which carbon nanotubes are dispersed to form a composite material, the aforesaid method including the steps of:

-    providing an electrical circuit comprising at least one voltage generator, an ammeter and two electrical contacts associated with the composite material, in such a way that the composite material closes the electrical circuit, and
- using the current strength measured by the ammeter to find the value of said humidity content.

The method according to the invention has the advantage of being highly sensitive to variations in the water content, as well as being versatile and applicable in different contexts without any significant loss of performance. This is because the method according to the invention makes use of the benefits offered by polymer materials, such as good processing characteristics, low cost and good mechanical properties, and can therefore be used in contexts where mechanical stresses and deformations are intense and continual.

Thus the method according to the invention helps to meet the increasing demand for what are known as "intelligent devices", in other words those capable of self-monitoring and adapting to constantly changing operating conditions.

The method according to the invention can also be adapted to provide useful information on the structural integrity of the composite material throughout its service life, while also measuring its water content, in such a way that a better understanding of fatigue rupture phenomena can be obtained and an alarm signal can be provided in case of anomalous operation.

It should be noted that carbon nanotubes do not adversely affect the mechanical behaviour or the barrier properties of the polymer matrix in which they can be inserted by simple and entirely conventional procedures which are well known to those skilled in the art. Indeed, a matrix treated in this way acquires unexpected mechanical properties such as increased resistance to compression, temperature and tension, and improved mouldability even for forming complex shapes.

More specifically, the carbon nanotubes are dispersed so as to form an electrically conductive network, which also limits the sliding of the polymer chains in such a way that the mechanical characteristics of the resulting composite material are enhanced, and limits the diffusion of gases and vapours within the material while increasing the thermal conductivity.

The polymer matrix is formed from a thermosetting polymer. In particular, the nanotubes are dispersed at ambient temperature directly into the precursors of the matrix. When a satisfactory dispersion has been achieved, the composite is heated to the crosslinking temperature and allowed to polymerize until a material having the desired mechanical characteristics is obtained. In this case, the setting reaction can be made to take place in such a way that an article with specific geometrical characteristics is obtained.

It is therefore possible to model the composite on which the measurements are to be made into the most suitable shape to meet requirements, and the desired performance in terms of sensitivity and precision of measurement can be obtained.

For example, the composite material can be shaped into films, tubes, panels, closures, bottles, bowls, multilayer manufactured articles, and manufactured articles in general, in liquid, solid or semi-solid form, and others. These manufactured articles are also characterized by mechanical properties which are optimized according to the end use.

If necessary, the composite material can form only a fraction of the mass of a given article, being for example a single-layer or multilayer coating on a different material.

The composite material used in the method according to the invention comprises the aforesaid polymer matrix in a percentage by weight of approximately 50-99%, preferably approximately 50-80% or 60-99%, and more preferably approximately 90-99% or 95-99%, and, on the other hand, the aforesaid carbon nanotubes in a percentage by weight of 0.01-10%, preferably approximately 0.1-5% or 0.5-10%, and more preferably approximately 0.1-3% or 0.5-5%.

The polymer matrix can comprise one or more thermosetting polymers, which may be synthetic and/or natural and partially or totally cross-linked, in which the carbon nanotubes are dispersed. These polymers are epoxy resins, used individually or in combination, functionalized if necessary and supplemented if necessary with additives which are conventional in the sector, such as antioxidants, stabilizers and plasticizers, all of these being within the scope of knowledge of those skilled in the art.

It has already been mentioned that the incorporation of carbon nanotubes into the polymer matrix improves the mechanical properties (such as the modulus of elasticity and the breaking stress) of the matrix, the thermal properties (such as a higher glass transition temperature and thermal degradation temperature of the polymer) and the liquid, gas and vapour permeability, thus permitting the production and processing of products which have a high mechanical modulus and good toughness.

The presence of carbon nanotubes in the polymer matrix is therefore a critical element of the method according to the invention. The term "carbon nanotube" typically means an inorganic solid formed essentially from one or more layers of graphite wound around each other with a diameter in the range from 1 to 50 nm and a length to diameter ratio of 100 or above. If the nanotube is formed by a single layer of graphite, it is called a single wall carbon nanotube (SWNT), while if it is formed by a plurality of graphite layers it is called a multi-wall carbon nanotube (MWNT). The structural arrangement of the carbon atoms gives the carbon nanotube many excellent physical properties, such as electrical conductivity similar to that of copper or gold, greater thermal conductivity along the principal axis than any other material, and greater mechanical strength than any other material. Carbon nanotubes can be surface treated, oxidized, purified or functionalized with organic molecules to improve their dispersion in the chosen polymer matrix.

Carbon nanotubes can be distributed uniformly throughout the body of polymer material or applied in certain selected areas to form a conductive network in these areas.

The nanotubes can be dispersed in the matrix by any method known to those skilled in the art, for example:

- by solvent casting;
- from the melted state, by die casting and/or extrusion;
- by mechanical or manual mixing or by means of a mill;
- by sonication, in other words the use of ultrasound to apply mechanical energy to the material to be mixed.

When the nanotubes have been dispersed in the matrix, the composite material can be subjected to further processing to form it into the products for end use. The following examples may be mentioned:

- films and membranes, compact or porous, which can be produced by die casting or solvent casting;
- special products which can be injection moulded into the specific shape, turned, extruded, or forged;
- multilayer products.

Examples of the embodiment of the invention will now be given for illustrative purposes only and without restrictive intent, with reference to the attached drawings in which:

> Figure 1 is a diagram of an electrical circuit associated with a composite material for the application of the method according to the invention,
> Figure 2 is a graph showing the percentage of water absorbed as a function of the square root of time divided by the thickness of the specimen (d) for two different specimens, and
> Figure 3 is a graph showing the normalized electrical resistance for two different specimens as a function of the water content.

Example 1

This example relates to the method for preparing the composite material.

Diglycidyl ether of bisphenol-A (DGEBA) supplied by Sigma-Aldrich was used as the starting material for forming the polymer matrix. DGEBA is formed by a condensation reaction between epichlorohydrin and bisphenol-A, catalyzed by a base (NaOH). The reaction is made to proceed with an excess of epichlorohydrin in order to limit the production of high molecular weight products.

In this way a resin was produced with an average molecular weight of approximately 370 g/mol, an epoxide equivalent weight (EEW) of 180-200, a viscosity of 1000-1800 Pa*s at 25°C, and a density of 969 kg/m$^3$.

The resin was then first heated to between 50°C and 80°C and then degassed for 45 minutes at 70°C in a vacuum oven. 0.5% carbon nanotubes was then incorporated into the resin by sonication for a period of 20 minutes. The nanotubes were of the multi-walled, non-functionalized type (Nanocyl®-3100), produced by "catalytic carbon vapour deposition" (ccvd) by NANOCYL S.A., Rue de l'Essor, 4 B-5060 Sambreville, Belgium. These nanotubes had been previously purified until a carbon percentage of more than 95% was obtained.

The resulting mixture was placed in an oil bath at 125°C, and di(4-aminophenyl)sulphone (DDS) in a stoichiometric quantity, calculated on the epoxide equivalent weight, was added to act as the curing agent. This was then mixed magnetically (at 400 r.p.m.) for about one hour to produce a homogeneous solution, which was then set by keeping it in an oven at 180 °C for three hours.

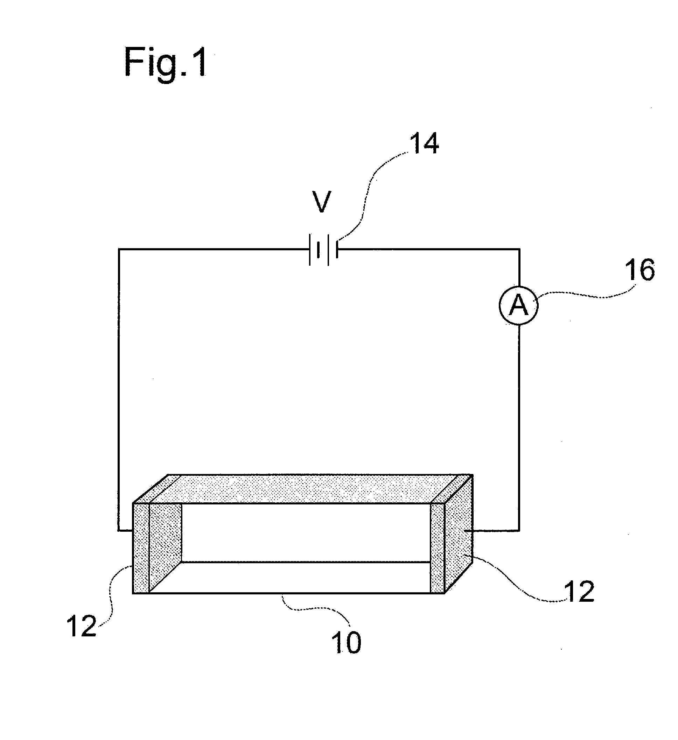

Two gold electrical contacts 12 where then applied by deposition on the most widely spaced ends of a cured resin specimen shaped in the form of a parallelepiped with dimensions of 35 x 10 x 3 mm (see reference numeral 10 in Figure 1). This specimen is referred to below as "specimen A".

Example 2

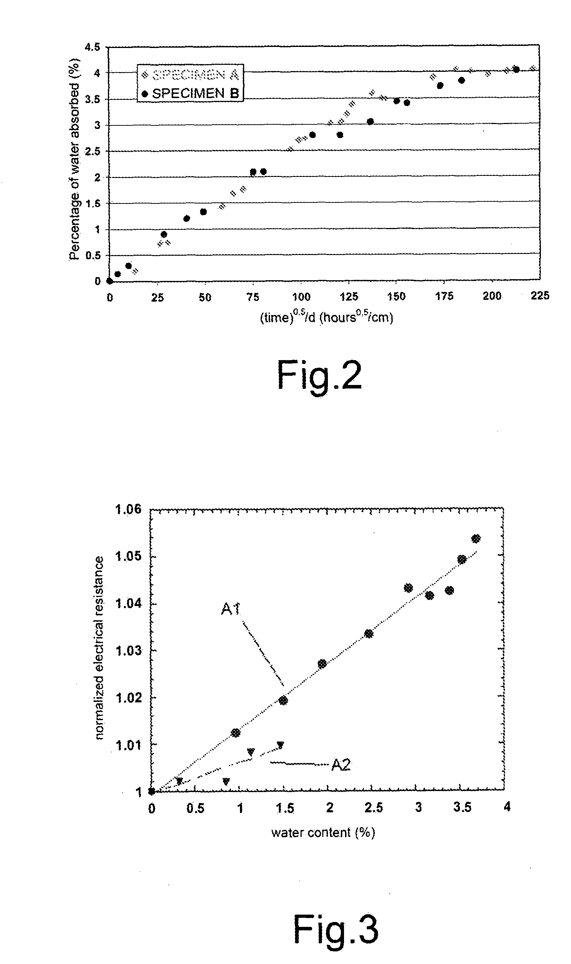

Another specimen of DGEBA+DDS was prepared by procedures entirely similar to those described in Example 1, except for the fact that it contained no carbon nanotubes (Specimen B). Specimens A and B were subjected to absorption tests in water at a constant temperature of 25°C. The water content is shown in Figure 2 as a function of the square root of the immersion time divided by the thickness of the specimen (d).

The experimental results show that the presence of carbon nanotubes in the polymer matrix does not substantially change the diffusion velocity and the percentage of water absorbed. This result demonstrates, therefore, that it is possible to add carbon nanotubes to only one portion of an article made from polymer material, in order to make measurements of the humidity content which are valid for the whole product.

Example 3

Two examples of specimen A, prepared as reported in Example 1, were subjected to water absorption tests by exposing them to environments kept at constant water activity.

In particular, a specimen A1 was kept in liquid water at a constant temperature of 25°C. A specimen A2 was kept in an environment with an activity of 0.68 created by using a saturated solution of $CuCl_2$ (in other

words, by dissolving 720 g of this salt in 1 litre of distilled water). The sealed container environment, in which the specimen and the saturated solution were placed, was degassed in a vacuum and hermetically sealed in order to establish a vapour tension of the water of the saturated solution corresponding to a water activity of 0.68.

The two specimens A1 and A2 were then used to close an electrical circuit comprising (Figure 1) a generator 14, providing a voltage of 10 volts, and a Keithley 2400 ammeter 16. Figure 3 shows the variation of the normalized electrical resistance in the specimens A1 and A2 as a function of the absorbed humidity content.

It can be seen that the normalized electrical resistance varies in a completely linear way with the variation of the humidity content and can therefore be used to measure the latter. This behaviour is also completely reproducible even after many cycles of absorption/desorption of the water.

Clearly, provided that the principle of the invention is retained, the details of construction and the embodiments can be varied widely from what has been described purely by way of example, without departure from the scope which has been claimed. In particular, according to the type of application required, it is possible to select in an optimal way parameters such as the type and functionalization of the carbon nanotubes, the porosity of the material, the presence of other components such as additives and reinforcing fibres, etc.

## Claims

1. Method of measuring the humidity content of a polymer matrix of epoxy resin in which carbon nanotubes are dispersed to form a composite material used in structural applications in aeronautics and comprising said carbon nanotubes in a percentage by weight of 0.01 - 10 %, said method including the steps of:

    - providing an electrical circuit comprising at least one voltage generator (14), an ammeter (16) and two electrical contacts (12) associated with the composite material, in such a way that the composite material closes the electrical circuit, and
    - using the current strength measured by the ammeter to find the value of said humidity content.

2. Method according to Claim 1, wherein the humidity content is related to the current strength by a linear proportional relationship.

3. Method according to Claim 1 or 2, wherein the composite material comprises said polymer matrix in a percentage by weight of approximately 50-99%, preferably approximately 50-80% or 60-99%, and more preferably approximately 90-99% or 95-99%.

4. Method according to any one of the preceding claims, wherein the composite material comprises said carbon nanotubes in a percentage by weight of 0.1-5% or 0.5-10%, and preferably 0.1-3% or 0.5-5%.

5. Method according to any one of the preceding claims, wherein said composite material additionally comprises one or more additives such as antioxidants, stabilizers and plasticizers and/or reinforcing materials such as glass fibres and carbon fibres.

6. Method according to any one of the preceding claims, wherein said carbon nanotubes are selected from single wall, multi-wall, chiral, zigzag, armchair, oxidized, purified and functionalized types.

7. Method according to any one of the preceding claims, wherein said carbon nanotubes are provided with an organic coating which improves their dispersion and/or adhesion to the polymer matrix.

8. Method according to any one of the preceding claims, which is carried out on an article formed completely or partially by said composite material.

## Patentansprüche

1. Verfahren zum Messen des Feuchtigkeitsgehalts einer Polymermatrix eines Epoxydharzes, in dem Kohlenstoff-Nanoröhrchen verteilt sind, um ein Verbundmaterial zu bilden, das bei baulichen Anwendungen in der Luft- und Raumfahrt verwendet wird und die Kohlenstoff-Nanoröhrchen mit einem Gewichtsprozentsatz von 0,01 bis 10% umfasst, wobei das Verfahren folgende Schritte aufweist:

    - Vorsehen eines elektrischen Schaltkreises, der zumindest einen Spannungsgenerator (14), ein Amperemeter (16) sowie zwei elektrische Kontakte (12) umfasst, die dem Verbundmaterial so zugeordnet sind, dass das Verbundmaterial den elektrischen Stromkreis schließt, und
    - Verwenden der Stromstärke, die mit dem Amperemeter gemessen wird, um den Wert des Feuchtigkeitsgehalts zu ermitteln.

2. Verfahren gemäß Anspruch 1, wobei der Feuchtigkeitsgehalt mit der Stromstärke in einem linearen Proportionsverhältnis in Beziehung steht.

3. Verfahren gemäß Anspruch 1 oder Anspruch 2, wobei das Verbundmaterial die Polymermatrix in einem Gewichtsprozentsatz von etwa 50 bis 99%, vorzugsweise von etwa 50 bis 80% oder von 60 bis 99% und am besten von etwa 90 bis 99% oder von 95 bis 99% umfasst.

**4.** Verfahren gemäß irgendeinem der bisherigen Ansprüche, wobei das Verbundmaterial die Kohlenstoff-Nanoröhrchen in einem Gewichtsprozentsatz von 0,1 bis 5% oder von 0,5 bis 10% und vorzugsweise von 0,1 bis 3% oder von 0,5 bis 5% umfasst.

**5.** Verfahren gemäß irgendeinem der bisherigen Ansprüche, wobei das Verbundmaterial zusätzlich einen oder mehrere Zusatzstoffe, wie etwa Antioxidationsmittel, Stabilisatoren und Plastifizierungsmittel und/oder Verstärkungsmaterialien umfasst, wie etwa Glasfasern und Carbonfasern.

**6.** Verfahren gemäß irgendeinem der bisherigen Ansprüche, wobei die Kohlenstoff-Nanoröhrchen aus einwandigen, mehrwandigen, chiralen, zickzackförmigen, bajonettförmigen, oxidierten, gereinigten und funktionalisierten Kohlenstoff-Nanoröhrchen ausgewählt werden.

**7.** Verfahren gemäß irgendeinem der bisherigen Ansprüche, wobei die Kohlenstoff-Nanoröhrchen mit einer organischen Beschichtung versehen werden, die ihre Verteilung in und/oder ihre Adhäsion an der Polymermatrix verbessert.

**8.** Verfahren gemäß irgendeinem der bisherigen Ansprüche, wobei das Verfahren auf einem Gegenstand ausgeführt wird, der vollständig oder teilweise von dem Verbundmaterial gebildet wird.

**Revendications**

**1.** Procédé de mesure de la teneur en humidité d'une matrice polymère de résine époxy dans laquelle des nanotubes de carbone sont dispersés pour former un matériau composite utilisé dans des applications structurales en aéronautique et comprenant lesdits nanotubes de carbone à hauteur d'un pourcentage en poids de 0,01 1 à 10 %, ledit procédé comprenant les étapes consistant à :

- prévoir un circuit électrique comprenant au moins un générateur de tension (14), un ampèremètre (16) et deux contacts électriques (12) associés au matériau composite, d'une manière telle que le matériau composite ferme le circuit électrique, et
- utiliser l'intensité de courant mesurée par l'ampèremètre pour trouver la valeur de ladite teneur en humidité.

**2.** Procédé selon la revendication 1, dans lequel la teneur en humidité est liée à l'intensité de courant par une relation proportionnelle linéaire.

**3.** Procédé selon la revendication 1 ou 2, dans lequel le matériau composite comprend ladite matrice polymère à hauteur d'un pourcentage en poids d'approximativement 50-99 %, de préférence d'approximativement 50-80 % ou 60-99 %, et plus préférentiellement d'approximativement 90-99 % ou 95-99 %.

**4.** Procédé selon l'une quelconque des revendications précédentes, dans lequel le matériau composite comprend lesdits nanotubes de carbone à hauteur d'un pourcentage en poids de 0,1-5 % ou 0,5-10 %, et de préférence de 0,1-3 % ou 0,5-5 %.

**5.** Procédé selon l'une quelconque des revendications précédentes, dans lequel ledit matériau composite comprend en plus un ou plusieurs additifs tels que des antioxydants, des agents stabilisateurs et des agents de plastification et/ou matériaux de renforcement tels que des fibres de verre et des fibres de carbone.

**6.** Procédé selon l'une quelconque des revendications précédentes, dans lequel lesdits nanotubes de carbone sont sélectionnés parmi des types fonctionnalisés, purifiés, oxydés, fauteuils, en zigzag, chiraux, à parois multiples et à paroi unique.

**7.** Procédé selon l'une quelconque des revendications précédentes, dans lequel lesdits nanotubes de carbone sont dotés d'un revêtement organique qui améliore leur dispersion et/ou adhérence à la matrice polymère.

**8.** Procédé selon l'une quelconque des revendications précédentes, qui est réalisé sur un objet constitué complètement ou partiellement par ledit matériau composite.

# Fig.1

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. Ogura ; T. Saillo ; M. Nakayama ; H. Shiigi.** The humidity dependence of the electrical conductivity of a soluble polyaniline-poly(vinyl alcohol) composite film. *Journal of Material, Chemistry,* 1997, vol. 7, 2363-2366
- **S. Jain. ; S. Chakane ; A. B. Samui ; V. N. Krishnamurthy ; S. V. Bhoraskar.** Humidity sensing with weak acid-doped polyaniline and its composites. *Sensors and Actuators B: Chemical,* 2003, vol. 96, 124-129
- **X. MA ; J. YU ; N. WANG.** *Composite Science and Technology,* 2008, vol. 68, 268-273
- **J.-M. PARK ; S.-J. KIM ; J-G. JUNG ; G. HANSEN ; D.-J. YOON.** *Proc. of SPIE,* 2006, vol. 6174, 1-9